# EUROPÄISCHE PATENTSCHRIFT

(11) **EP 1 438 245 B1**
(45) Veröffentlichungstag und Bekanntmachung des Hinweises auf die Patenterteilung: **30.08.2006**
(21) Anmeldenummer: 02764876.5
(22) Anmeldetag: 06.09.2002
(51) Int. Cl.: B65G 47/82

(54) **VORRICHTUNG ZUM AUSLEITEN VON OBJEKTEN UNTERSCHIEDLICHER MASSE**
DEVICE FOR REDIRECTING OBJECTS HAVING DIFFERENT MASSES
DISPOSITIF DE REDIRECTION D'OBJETS PRESENTANT DES MASSES DIFFERENTES

(30) Priorität: 19.09.2001 DE 20115478 U
(43) Veröffentlichungstag der Anmeldung: 21.07.2004
(73) Patentinhaber: HEUFT SYSTEMTECHNIK GMBH, 56659 Burgbrohl (DE)
(72) Erfinder: HEUFT, Bernhard, 56659 Burgbrohl (DE); KRISTANDT, Gerd, 67551 Worms (DE)
(74) Vertreter: Gritschneder, Martin
(86) Internationale Anmeldenummer: PCT/EP2002/009982
(87) Internationale Veröffentlichungsnummer: WO 2003/024848

(56) Entgegenhaltungen:
- EP-A- 0 089 847
- EP-A- 0 761 545
- FR-A- 2 724 916
- US-A- 4 321 994
- US-A- 5 979 635

## Beschreibung

Die Erfindung betrifft eine Vorrichtung zum selektiven Ausleiten von Objekten wie Behältern, Gebinden, Packstücken unterschiedlicher Masse. Die Vorrichtung weist eine erste Transporteinrichtung für die Objekte auf und eine Ausleiteinrichtung zum Ausleiten vorgegebener Objekte von der ersten Transporteinrichtung auf eine zweite Transporteinrichtung. Mittels einer Steuereinrichtung wird dabei die Intensität gesteuert, mit der die Objekte von der ersten Transporteinrichtung auf die zweite Transporteinrichtung ausgeleitet werden.

Derartige Ausleitvorrichtungen werden eingesetzt, um aus einem Strom derartiger Objekte fehlerbehaftete Objekte auszuleiten, z.B. nicht vollständig gefüllte Behälter.

Aus WO 00/68120 (= DE-U-299 08 036) und aus US-A-5 979 635 ist es bekannt, die Intensität, mit der Objekte ausgeleitet werden so zu steuern, dass die Objekte einen unterschiedlich starken Ausleitimpuls quer zu ihrer Transportrichtung erhalten und dadurch auf eine von mehreren parallelen nebeneinander verlaufenden zweiten Transporteinrichtungen gelangen.

Eine ähnliche Vorrichtung ist aus DE-A-100 07 627 bekannt, wobei aufrecht stehende Flaschen mittels eines einzigen Impulses eines Pushers ausgeleitet werden, während liegende Flaschen mittels einer Impulsfolge des Pushers ausgeleitet werden.

Aus DE-C2-36 23 327 ist eine Vorrichtung zum Aussortieren von fehlerhaften Verpackungseinheiten bekannt, wobei der Winkel automatisch gesteuert wird, unter dem der Pusher die Verpackungseinheiten von dem Förderband schiebt. Der Winkel wird in Abhängigkeit von der Transportgeschwindigkeit des Förderbandes und dem dazu senkrechten Vektor der erforderlichen Schiebegeschwindigkeit eingestellt.

Aus DE-C1-37 34 599 ist eine Vorrichtung zum Aussortieren von fehlerhaften Verpackungseinheiten, insbesondere Flaschen, bekannt, wobei der Pusher durch eine Kurvenscheibe angetrieben wird und als eine Schieberplatte ausgeführt ist, an der ein Bürstensegment befestigt ist. Die Beschleunigung und die Geschwindigkeit des Schiebers beim Aussortiervorgang werden durch die Form und die Drehgeschwindigkeit der Kurvenscheibe bestimmt. Dadurch soll erreicht werden, dass der Weg, um den die auszusortierenden Verpackungseinheiten verschoben werden, unabhängig von dem Grad der Füllung der Verpackungseinheiten ist.

Ausleiteinrichtungen weisen ein quer zur Transportrichtung verschiebbares Ausleitelement auf, das pneumatisch oder elektromotorisch angetrieben wird. Das Ausleitelement kann auch in einer Luftdüse bestehen, die ein auszuleitendes Objekt quer zur Transportrichtung schiebt. Bei Ausleitvorrichtungen, bei denen Objekte unterschiedlicher Masse auf eine zweite Transporteinrichtung ausgeleitet werden sollen, besteht die Schwierigkeit, dass leichte Objekte von der Ausleiteinrichtung stärker beschleunigt werden und dadurch eine höhere Geschwindigkeitskomponente quer zur Transportrichtung erhalten als schwere Objekte.

Der Erfindung liegt die Aufgabe zugrunde, eine Ausleitvorrichtung zu schaffen, die Objekte unabhängig von ihrer Masse eine Querimpuls erteilt, der zu einer etwa gleich weiten Verschiebung der Objekte quer zur Transportrichtung führt.

Erfindungsgemäß wird diese Aufgabe durch eine Einrichtung zur Ermittlung des Fortschreitens der Ausleitung eines Objektes gelöst, wobei die Steuereinrichtung in Abhängigkeit von dem ermittelten Fortschritt die Ausleiteinrichtung stärker oder länger aktiviert, wenn der Fortschritt kleiner ist, und umgekehrt.

Schwere Objekte erhalten aufgrund ihrer größeren Masse von dem Ausleitelement zunächst eine kleinere Geschwindigkeitskomponente quer zur Transportrichtung. Mittels eines Sensors wird das Fortschreiten der Ausleitung bspw. dadurch überwacht, dass die Zeitspanne gemessen wird, die das Ausleitelement oder das auszuleitende Objekt benötigt, um einen bestimmten Punkt seiner Ausleitbewegung zu erreichen. Wenn der Sensor meldet, dass diese Zeitspanne über einem bestimmten Wert liegt, so wird die Ausleiteinrichtung für den Rest der Ausleitbewegung stärker aktiviert, d.h. bei einer pneumatischen Ausleiteinrichtung wird das Ausleitelement mit einem höheren Druck oder weiter ausgefahren und bei einem elektromotorisch angetriebenen Ausleitelement wird die Spannung des elektromotorischen Antriebs erhöht oder für eine längere Zeitdauer angelegt. Bei einem Ausleitelement in Form einer Luftdüse wird der Düsendruck erhöht oder ebenfalls für eine längere Zeitdauer angelegt.

In einer anderen Ausführungsform wird die zu einem bestimmten Zeitpunkt nach Beginn des Ausleitvorganges erreichte Geschwindigkeit des Ausleitelements, gemessen. Dazu kann ein Winkelgeber, ein Linear-Encoder, ein Geschwindigkeitsmesser oder ein Beschleunigungsgeber verwendet werden. Der Grundgedanke dabei ist jeweils, dass ein schwereres Objekt für die vorgegebene Strecke mehr Zeit benötigt oder eine kleinere Geschwindigkeit erreicht hat als ein leichteres Objekt, so dass die Ausleiteinrichtung entsprechend stärker oder länger aktiviert werden muss.

Die Steuerung der Ausleiteinrichtung kann auch in der Weise erfolgen, dass in dem Ausleitelement ein Kraftsensor integriert ist, der die Kraft misst, mit der das Ausleitelement gegen das Objekt drückt. Ein massereicheres Objekt setzt dem Ausleitelement einen stärkeren Widerstand entgegen, so dass eine höhere Kraft gemessen wird.

Bei einem elektromotorisch angetriebenen Ausleitelement kann auch die Stromaufnahme als Kriterium herangezogen werden.

In Abhängigkeit von dem ermittelten Fortschritt wird die Ausleiteinrichtung aktiviert, und zwar bei geringerem Fortschritt ist die Aktivierung stärker oder länger und umgekehrt. Wird also an einem vorgegebenen Punkt eine relativ geringe Geschwindigkeit oder eine lange Ausfahrzeit festgestellt, so wird die Ausleiteinrichtung stärker oder länger aktiviert. Bei einem pneumatischen Antrieb der Ausleiteinrichtung wird z.B. der dem Zylinder zugeführte Druck erhöht oder das Ausleitelement wird weiter aufgefahren, d.h. das Objekt wird für eine längere Zeitdauer von dem Ausleitelement quer zur Transportrichtung beschleunigt. Entsprechend wird bei einem elektromotorischen Antrieb der zugeführte Strom erhöht oder der Ausleitvorgang verlängert.

Die erfindungsgemäße Ausleitvorrichtung kann auch dazu verwendet werden, Objekte unterschiedlicher Masse von einer ersten Transporteinrichtung auf eine von mehreren zweiten Transporteinrichtungen auszuleiten. Je weiter die betreffende zweite Transporteinrichtung von der ersten Transporteinrichtung entfernt ist, umso stärker muss die Ausleiteinrichtung aktiviert werden, wobei erfindungsgemäß die Aktivierung zusätzlich entsprechend der Masse des Objekts erfolgt.

Die erfindungsgemäße Ausleitvorrichtung eignet sich insbesondere für solche Transportanlagen, bei denen die Objekte in einem sehr kleinen Abstand von allenfalls wenigen Millimetern an dem Ausleitelement vorbei transportiert werden. Der Abstand soll insbesondere klein im Vergleich zur Länge der Ausleitbewegung des Ausleitelements sein. Wenn der Abstand größer ist, z.B. 2 cm, so ist die erfindungsgemäße Ausleitvorrichtung bei stabilen Objekten, wie Bierkästen oder Mineralwasserkästen, ebenfalls einsetzbar, wenn der Abstand zumindest immer gleich ist.

Ein Ausführungsbeispiel der Erfindung wird nachfolgend anhand der Zeichnung erläutert. Es zeigen:
- Fig. 1: die Ausleiteinrichtung von oben im Ruhezustand;
- Fig. 2 und 3: die Ausleiteinrichtung von Fig. 1 zu verschiedenen Zeitpunkten während eines Ausleitvorganges und
- Fig. 4: das Zeitdiagramm eines Ausleitvorganges.

Eine Ausleiteinrichtung 10 ist neben einem ersten Transporteur 11, der ein Gliederkettenförderer ist angeordnet. Der erste Transporteur 11 fördert ein Objekt 14, das im dargestellten Beispiel ein Bierkasten ist, an der Ausleiteinrichtung 10 vorbei. Die Ausleiteinrichtung 10 dient dazu, bestimmte Objekte 14, z.B. nicht vollständig gefüllte Bierkästen, von dem ersten Transporteur 11 auf einen parallel daneben verlaufenden zweiten Transporteur 12 zu schieben und damit aus dem weiteren Produktionsvorgang auszuschleusen.

Die Ausleiteinrichtung 10 enthält ein Ausleitelement 16, das mittels eines Schwenkarmes 18 verschwenkbar ist. Das Ausleitelement 16 ist eine in Transportrichtung ausgerichtete Platte, und der Schwenkarm 18 ist so ausgebildet, dass die Ausrichtung des Ausleitelements 16 beim Ausschwenken beibehalten wird. Der Schwenkarm 18 besteht dazu aus einem Haupthebel 19 und einem Parallelhebel 20.

Die Drehpunkte 21 des Haupthebels 19 und des Parallelhebels 20 sind gegenüber dem Ausleitelement 16 in einem Abstand in der durch den Pfeil 22 angegebenen Transportrichtung angeordnet, so dass sich das Ausleitelement 16 beim Ausschwenken zugleich etwas in Transportrichtung bewegt. Das Objekt 14 wird daher beim Ausschwenken des Ausleitelements 16 auf dem ersten Transporteur 11 im Wesentlichen in Querrichtung verschoben, ohne dass eine größere Relativbewegung in Transportrichtung zwischen dem Objekt 14 und dem Ausleitelement 16 stattfindet.

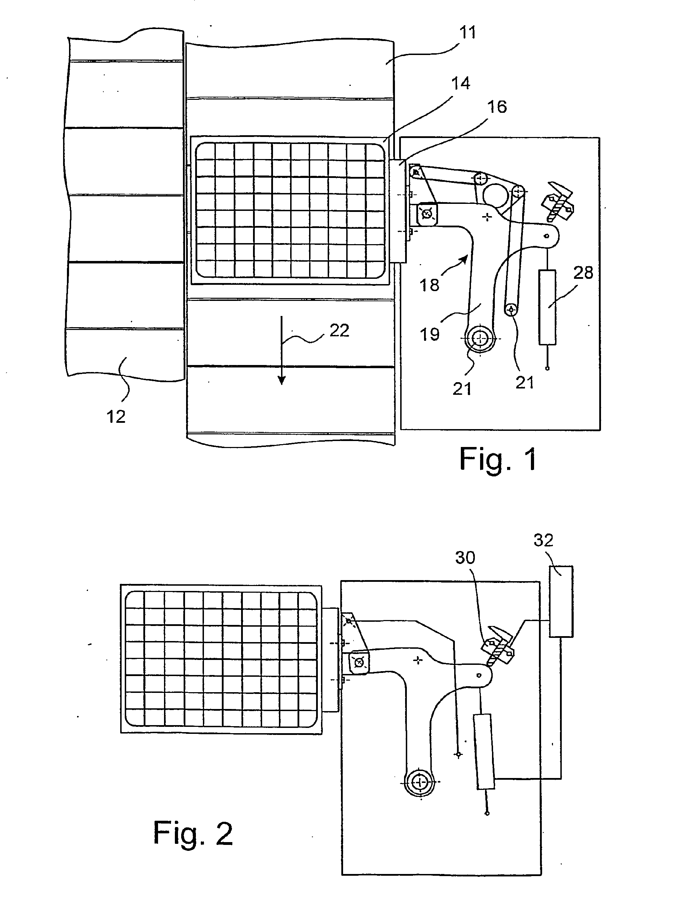

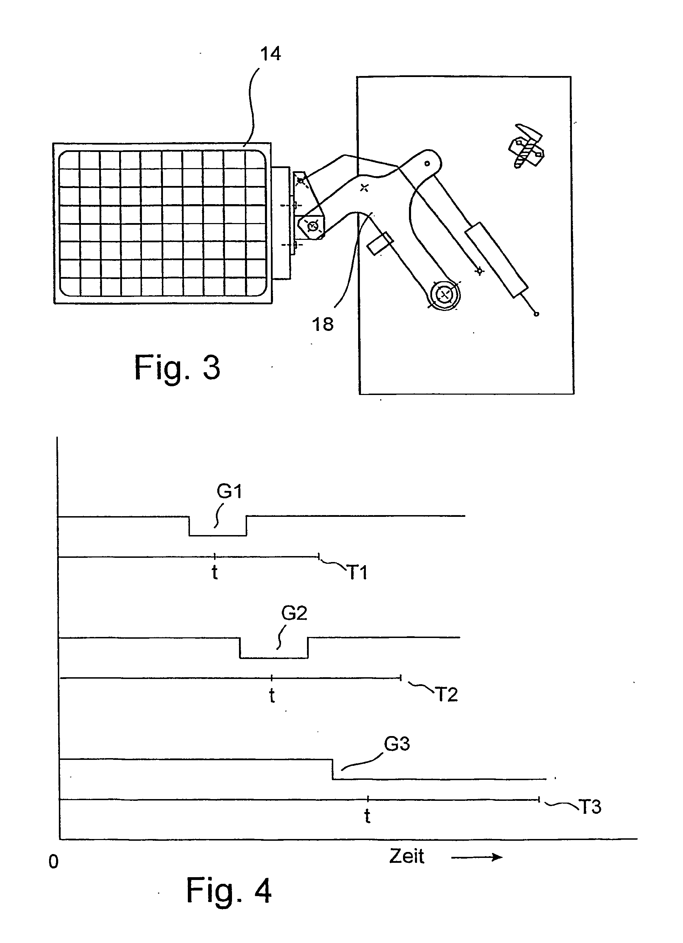

Der Haupthebel 19 ist etwa T-förmig und ist am unteren Ende der vertikalen T-Säule in dem Drehpunkt 21 angelenkt. In der in Fig. 1 gezeigten Ausgangslage liegt die vertikale T-Säule etwa gegenparallel zur Transportrichtung 22. An dem zu dem ersten Transporteur 11 zeigenden Ende des horizontalen T-Balkens ist das Ausleitelement 16 angelenkt, während an dem von dem ersten Transporteur 11 weg zeigenden Ende ein Schwenkzylinder 28 angreift. In geringem Abstand von diesem Ende des horizontalen T-Balkens ist ein Sensor 30 angeordnet. Der Sensor 30 erzeugt ein Triggersignal, wenn sich das Ende des T-Balkens an ihm vorbeibewegt. Dieses Triggersignal wird erzeugt, wenn sich der Parallelhebel 18 um etwa 2° verschwenkt hat, was einer Ausfahrstrecke des Ausleitelements 16 von etwa 17 mm entspricht (Fig. 2). Die Zeitspanne t, die zwischen der Ansteuerung des Schwenkzylinders 28 und dem Auftreten des Triggersignals vergeht, dient als Maß für die Masse des Objekts 14. Je länger diese Zeitspanne t ist, desto größer ist die Masse des Objekts 14. Mittels einer Steuereinrichtung 32 wird die Länge der Ansteuerzeit T des Schwenkzylinders 28 in Abhängigkeit von dieser Zeitspanne t gesteuert. Für die Zeitspanne t existieren drei hintereinander liegende Tore. Fällt die Zeitspanne t in den Bereich des ersten Tors G1, so wird die Ansteuerzeit T1 gewählt. Fällt die Zeitspanne t in den Bereich des zweiten Tors G2, so wird die Ansteuerzeit T2 verwendet, die größer als T1 ist. Fällt die Zeitspanne t in das dritte Tor G3, so wird die Ansteuerzeit T3, die größer als T2 ist, gewählt (Fig. 4).

Die Ansteuerzeiten T werden experimentell ermittelt und der Steuereinrichtung 32 eingelernt. In dem dargestellten Ausführungsbeispiel wird die Ansteuerzeit T stufenweise gesteuert. Vorzugsweise wird sie jedoch über eine Kennlinie kontinuierlich gesteuert. Mehrer Punkte der Kennlinie werden dazu experimentell ermittelt und die dazwischen liegenden Kurvenabschnitte werden interpoliert.

Beim experimentellen Ermitteln der Ansteuerzeiten T bzw. der Kennlinie kann auch der Einfluss der unterschiedlichen Reibung schwerer und leichter Objekte berücksichtigt werden.

### Bezugszeichenliste

- 10: Ausleiteinrichtung
- 11: erster Transporteur
- 12: zweiter Transporteur
- 14: Objekt
- 16: Ausleitelement
- 18: Parallelhebel
- 19: Haupthebel
- 20: Hilfshebel
- 21: Drehpunkte
- 22: Transportrichtung
- 28: Schwenkzylinder
- 30: Sensor
- 32: Steuereinrichtung

## Patentansprüche

1. Vorrichtung zum selektiven Ausleiten von Objekten (14) wie Behältern, Gebinden, Packstücken, unterschiedlicher Masse, mit einer ersten Transporteinrichtung (11) für die Objekte (14), mit einer Ausleiteinrichtung (10) zum Ausleiten vorgegebener Objekte (14) von der ersten Transporteinrichtung (11) auf eine zweite Transporteinrichtung (12) und mit einer Steuereinrichtung (32) zum Steuern der Intensität, mit der die Ausleiteinrichtung (10) die Objekte (14) von der ersten (11) auf die zweite (12) Transporteinrichtung ausleitet, **gekennzeichnet durch**
- eine Einrichtung (30, 32) zur Ermittlung des Fortschreitens der Ausleitung eines Objekts (14), wobei die Steuereinrichtung (32) in Abhängigkeit von dem ermittelten Fortschritt der Ausleitung aktiviert wird, und zwar so, dass bei einem geringeren Fortschritt eine stärkere oder längere Aktivierung erfolgt und umgekehrt.

2. Vorrichtung nach Anspruch 1, **dadurch gekennzeichnet, dass** der Fortschritt der Ausleitung in der Weise ermittelt wird, dass die Zeitspanne t gemessen wird, innerhalb der ein Ausleitelement (16) oder das auszuleitendes Objekt (10) einen vorgegebenen Weg zurückgelegt hat.

3. Vorrichtung nach Anspruch 1, **dadurch gekennzeichnet, dass** der Fortschritt der Ausleitung mittels eines Winkelgebers, Linear-Encoders, einer Geschwindigkeitsmessung, eines Beschleunigungsgebers, die entweder für eine bestimmte Strecke, zum Erreichen einer bestimmten Geschwindigkeit oder Beschleunigung erforderliche Zeit messen oder mittels eines Kraftsensors, der die zum Bewegen des Objekts (14) erforderliche Kraft misst, ermittelt wird.

4. Vorrichtung nach einem der Ansprüche 1 bis 3, **dadurch gekennzeichnet, dass** die Ausleiteinrichtung (10) pneumatisch oder elektromotorisch angetrieben wird.

5. Ausleitvorrichtung nach Anspruch 4, **dadurch gekennzeichnet, dass** bei einem elektromotorischen Antrieb der Ausleiteinrichtung (10) der Fortschritt der Ausleitung über die Messung der Stromaufnahme ermittelt wird.

6. Vorrichtung nach einem der Ansprüche 1 bis 5, **dadurch gekennzeichnet, dass** die Stärke oder Dauer der Aktivierung der Ausleiteinrichtung (10) anhand einer kontinuierlichen Kennlinie in Abhängigkeit von der Zeitspanne t gesteuert wird.

7. Vorrichtung nach einem der Ansprüche 1 bis 6, **dadurch gekennzeichnet, dass** die Objekte (14) in kleinem Abstand an der Ausleiteinrichtung (10) vorbei transportiert werden.

## Claims

1. Apparatus for the selective diversion of objects (14) such as containers, packing, packing units, of different mass, with a first transport device (11) for the objects (14), with a diversion device (10) for diversion of predetermined objects (14) from the first transport device (11) onto a second transport device (12) and with a control device (32) for controlling the intensity with which the diversion device (10) diverts the objects (14) from the first (11) onto the second (12) transport device, **characterized by**
- a device (30, 32) for establishing the progress of the diversion of an object (14), the control device (32) being activated depending on the established progress of the diversion such that, in the case of a lesser progress a stronger or longer activation occurs and vice versa.

2. Apparatus according to claim 1, **characterized in that** the progress of the diversion is established by measuring the period of time t within which a diversion element (16) or the object (10) to be diverted has covered a predetermined path.

3. Apparatus according to claim 1, **characterized in that** the progress of the diversion is established by means of an angle transmitter, linear encoder, a speed measurement or an acceleration indicator, which measure the time required for a certain section or for reaching a certain speed or acceleration, or by means of a force sensor which measures the force required to move the object (14).

4. Apparatus according to one of claims 1 to 3, **characterized in that** the diversion device (10) is driven pneumatically or by electric motor.

5. Diversion apparatus according to claim 4, **characterized in that** in the case of a drive by electric motor of the diversion device (10) the progress of the diversion is established by measuring the power consumption.

6. Apparatus according to one of claims 1 to 5, **characterized in that** the intensity or duration of the activation of the diversion device (10) is controlled by reference to a continuous characteristic line depending on the period of time t.

7. Apparatus according to one of claims 1 to 6, **characterized in that** the objects (14) are transported at a small distance past the diversion device (10).

## Revendications

1. Dispositif de redirection sélective d'objets (14) comme des récipients, des emballages, des colis de différente masse, comprenant un premier système de transport (11) pour les objets (14), comprenant un système de redirection (10) destiné à rediriger les objets prédéfinis (14) du premier système de transport (11) vers un second système de transport (12) et comprenant un système de commande (23) destiné à commander l'intensité avec laquelle le système de redirection (10) redirige les objets (14) du premier (11) vers le second (12) système de transport, **caractérisé par**
- un système (30, 32) destiné à déterminer la progression de la redirection d'un objet (14), le système de commande (32) étant activé en fonction de la progression déterminée de la redirection, et ce de sorte que lorsque la progression est moins élevé, il s'effectue une activation plus forte ou plus longue et inversement.

2. Dispositif selon la revendication 1, **caractérisé en ce que** la progression de la redirection est déterminée de telle sorte que le laps de temps t est mesuré, pendant lequel un élément de redirection (16) ou l'objet (10) à rediriger a parcouru un trajet prédéfini.

3. Dispositif selon la revendication 1, **caractérisé en ce que** la progression de la redirection est déterminée au moyen d'un indicateur d'angle, d'un encodeur linéaire, d'une mesure de la vitesse, d'un indicateur d'accélération, qui mesurent soit le temps nécessaire pour un trajet défini pour atteindre une vitesse ou une accélération définie, soit au moyen d'un capteur de force, qui mesure la force nécessaire pour déplacer l'objet (14).

4. Dispositif selon l'une quelconque des revendications 1 à 3, **caractérisé en ce que** le système de redirection (10) est entraîné de façon pneumatique ou électromotrice.

5. Dispositif de redirection selon la revendication 4, **caractérisé en ce que** dans le cas d'un entraînement électromoteur du système de redirection (10), la progression de la redirection est déterminée en mesurant la consommation de courant.

6. Dispositif selon l'une quelconque des revendications 1 à 5, **caractérisé en ce que** la force ou la durée de l'activation du système de redirection (10) est commandée en s'appuyant sur une courbe caractéristique continue en fonction du laps de temps t.

7. Dispositif selon l'une quelconque des revendications 1 à 6, **caractérisé en ce que** les objets (14) sont transportés selon un léger écart en passant devant le système de redirection (10).
